# FASCICULE DE BREVET EUROPEEN

(11) **EP 1 682 363 B1**
(45) Date de publication et mention de la délivrance du brevet: **19.03.2008**
(21) Numéro de dépôt: 04797505.7
(22) Date de dépôt: 02.11.2004
(51) Int. Cl.: B60C 17/06

(54) **APPUI DE SECURITE SEGMENTE**
SEGMENTIERTE STÜTZE
SEGMENTED SUPPORT

(30) Priorité: 05.11.2003 FR 0313080
(43) Date de publication de la demande: 26.07.2006
(73) Titulaire: Société de Technologie Michelin, 63000 Clermont-Ferrand (FR); Michelin Recherche et Technique S.A., 1763 Granges-Paccot (CH)
(72) Inventeur: LACOUR, Jean-Charles, F-63000 Clermont-Ferrand (FR)
(74) Mandataire: Dequire, Philippe Jean-Marie Denis
(86) Numéro de dépôt international: PCT/EP2004/012359
(87) Numéro de publication internationale: WO 2005/044598

(56) Documents cités:
- WO-A-00/76791
- US-A- 4 248 286

## Description

La présente invention concerne les appuis de soutien pour pneumatiques de véhicules, destinés à être montés sur leurs jantes, à l'intérieur des pneumatiques pour supporter la charge en cas de défaillance du pneumatique ou de pression anormalement basse.

Elle concerne plus particulièrement les appuis de soutien dits « structurels », généralement réalisés à partir d'un matériau élastomère, comportant :
- une base sensiblement cylindrique destinée à s'adapter à la jante ;
- un sommet sensiblement cylindrique destiné à entrer en contact avec la partie intérieure du pneumatique située sous la bande de roulement, en cas de perte de pression, et laissant une garde par rapport à celle-ci à la pression nominale de fonctionnement du pneumatique ; et
- un corps annulaire reliant la base et le sommet, ledit corps étant constitué par une pluralité de cloisons généralement radiales, s'étendant axialement de part et d'autre d'un plan médian circonférentiel et réparties sur la circonférence dudit appuis. Ces cloisons peuvent être reliées deux à deux par des éléments de jonction s'étendant sensiblement circonférentiellement.

De nombreuses publications décrivent les profils et la disposition de ces cloisons et de ces éléments de jonction.

La publication US 4 248 286 dévoile un appui comportant des cloisons sensiblement axiales non reliées par des éléments de jonction circonférentiels.

Les publications EP 796 747, JP3082601 WO 00/76791 présentent des profils de cloisons reliées entre elles par des jonctions continues sensiblement circonférentielles. Ces éléments de jonction, peuvent être situés d'un même côté d'un plan médian, ou alternés de part et d'autre du plan médian ; de même, la géométrie des cloisons peut être adaptée dans leur partie centrale pour résister à un flambement sous un chargement radial du corps annulaire. Ces profils de corps annulaire ont l'avantage par rapport à la publication US 4 248 286 précédemment citée d'augmenter très significativement la rigidité structurelle du corps annulaire et par voie de conséquence de permettre d'alléger considérablement la masse de l'appui de soutien pour une charge identique et un matériau donné. Il est à noter que la diminution du poids des ensembles roulants non suspendus constitue un élément majeur de la performance des véhicules et qu'à ce titre, l'allègement de l'appui représente un enjeu de premier ordre.

En condition de roulage à plat, ou sous faible pression, les cloisons de l'appui vont subir un écrasement limité dans l'aire de contact entre le sol et le pneumatique sous l'effet de la partie du poids du véhicule appliquée sur cet ensemble roulant et des charges dynamiques que subit ce même ensemble roulant lors des changements de direction du véhicule. Il est à noter que la performance de roulage à plat du véhicule dépend en partie de la forme de cette aire de contact. Pour ce mode de fonctionnement on cherchera donc à éviter l'effondrement de l'appui sur lui-même, que provoquerait le flambement des cloisons sous l'effet d'une charge trop importante. Si tel était le cas, l'appui perdrait en grande partie ses fonctionnalités et surtout verrait sa performance en endurance décroître de manière spectaculaire en raison des échauffements que provoqueraient les flexions répétées des cloisons.

Toutefois, si les appuis de soutien sont conçus pour satisfaire entre autres les conditions de roulage à plat, celles ci demeurent fort heureusement exceptionnelles. Il est en effet souhaitable de faire en sorte que l'appui ne perturbe pas le fonctionnement du pneumatique en condition d'usage normal sous pression nominale. Ceci pourrait être le cas lorsque le véhicule affronte accidentellement un obstacle localisé, tel qu'un nid de poule ou un trottoir, à une vitesse excessive. En effet lorsque cet événement accidentel se produit, l'obstacle agit comme un coin et vient comprimer localement le pneumatique, lequel va se déformer. La course radiale de cette déformation, varie en fonction de la quantité globale d'énergie à absorber, laquelle dépend au premier ordre de la vitesse et de la masse du véhicule au moment du choc ainsi que de la forme de l'obstacle localisé.

Cette déformation comporte trois phases bien distinctes :
- une course purement pneumatique correspondant à la compression du pneumatique jusqu'à ce que la surface interne du pneumatique vienne en contact avec l'appui,
- une phase combinée au cours de laquelle, le pneumatique poursuivant sa course de mise en compression, les cloisons de l'appui situées au niveau de l'impact rentrent à leur tour en compression puis, lorsque le seuil de flambement des cloisons est atteint, s'effondrent sur elles-mêmes,
- enfin, une phase non pneumatique lorsque l'ensemble constitué par le pneumatique et l'appui est comprimé sur lui-même et forme un ensemble solide élastique jusqu'à constituer un ensemble incompressible. En dernier ressort l'absorption de cette énergie peut se traduire par une déformation permanente des éléments mécaniques eux-mêmes.

L'intégration d'un appui de soutien dans un pneumatique est donc susceptible de réduire sensiblement la course purement pneumatique en cas de choc, comparativement à la situation dans laquelle aucun appui de soutien ne serait introduit sur la jante. On observera que pendant la phase de compression des cloisons qui se produit au début de la phase combinée, la course de la déformation est faible et absorbe une grande quantité d'énergie ce qui est une cause d'inconfort pour le passager du véhicule et de sollicitation importante des organes mécaniques du véhicule.

On recherchera donc, lors de la conception des appuis, à améliorer ce niveau de performance.

Une première solution consiste à augmenter la garde de l'appui, ce qui revient à réduire la hauteur dudit appui. Néanmoins, ceci ne saurait se faire sans réduire également, et de manière importante, la performance en mode de roulage à plat, en raison de l'augmentation de la flexion des flancs du pneumatique dans cette configuration.

L'invention permet de réaliser des appuis de soutien de masse équivalente et ayant les mêmes performances en mode roulage à plat que les appuis structurels précédemment décrits, mais présentant la particularité de réduire de manière contrôlée, en cas de choc accidentel, de type choc trottoir ou choc nid de poule, le seuil de flambement des cloisons. Ce qui a pour effet de réduire de manière significative l'énergie transmise au châssis, en améliorant de ce fait le confort des passagers.

Selon une première forme de réalisation, l'invention propose un appui de soutien destiné à être monté sur une jante à l'intérieur d'un pneumatique équipant un véhicule, pour supporter la bande de roulement de ce pneumatique en cas de perte de pression de gonflage, comportant :
- une base sensiblement cylindrique destinée à s'adapter à la jante,
- un sommet sensiblement cylindrique destiné à entrer en contact avec la partie intérieure du pneumatique située sous la bande de roulement en cas de perte de pression et laissant une garde par rapport à celle-ci à la pression nominale de fonctionnement du pneumatique, et
- un corps annulaire reliant la base et le sommet, ledit corps étant constitué par une pluralité de cloisons, généralement radiales, réparties sur la circonférence dudit appui et s'étendant sensiblement axialement, et par des jonctions, généralement radiales, s'étendant sensiblement circonférentiellement et reliées par leurs extrémités à deux cloisons adjacentes,
caractérisé en ce que les jonctions sont interrompues par des saignées axiales de très faible largeur s'étendant radialement sur la totalité de ladite jonction et débouchant axialement de part et d'autre de la jonction, la portion d'appui comprise entre deux saignées constituant un segment.

Il a été mis en évidence que la présence de cette saignée de faible largeur ne perturbe pratiquement pas le fonctionnement de l'appui en mode de roulage à plat, lequel se comporte sensiblement comme un appui standard similaire et dans lequel les jonctions demeurent continues. Mais qu'en revanche, les cloisons d'un appui conforme à l'invention "s'effacent" plus aisément sous l'action d'un choc ponctuel que les appuis traditionnels.

Afin de réduire encore le seuil de flambement des cloisons il est possible, dans une deuxième forme de réalisation de prolonger radialement la saignée sur tout ou partie du sommet.

Le mode de fonctionnement d'un appui de soutien conforme à l'invention ainsi que les différents modes de réalisation conformes à l'invention sont décrits ci-après en référence aux schémas et dessins dans lesquels :
- la figure 1 représente une vue perspective schématique simplifiée d'un appui de soutien conforme à l'invention,
- la figure 2 représente une vue de face d'une portion d'appui tel que représenté sur la figure 1,
- la figure 3 représente une vue en coupe selon une ligne FF' de la portion d'appui telle que représentée sur la figure 2,
- la figure 4 représente une vue en perspective de la portion d'appui représentée sur les figures 2 et 3,
- la figure 5 représente une vue schématique partielle d'un appui en mode de fonctionnement à pression réduite,
- la figure 6 représente une vue schématique partielle d'un appui en cas de choc,
- la figure 7 représente un diagramme comparant les efforts enregistrés au centre roue, en fonction de la déformation par un obstacle isolé, d'un ensemble roulant constitué d'un pneumatique monté sur une jante et comportant un appui de soutien et gonflé à sa pression nominale,
- la figure 8 représente une vue perspective schématique simplifiée d'un appui de soutien conforme à l'invention selon un deuxième mode de réalisation,
- la figure 9 représente une vue de face d'une portion d'appui tel que représenté sur la figure 8,
- la figure 10 représente une vue en coupe selon une ligne GG' de la portion d'appui telle que représentée sur la figure 9,
- la figure 11 représente une vue perspective de la portion d'appui représentée sur les figures 9 et 10,
- la figure 12 représente une vue schématique partielle d'un appui conforme à l'invention selon un deuxième mode de réalisation en mode de fonctionnement à pression réduite,
- la figure 13 représente une vue schématique partielle d'un appui conforme à l'invention selon un deuxième mode de réalisation en cas de choc.

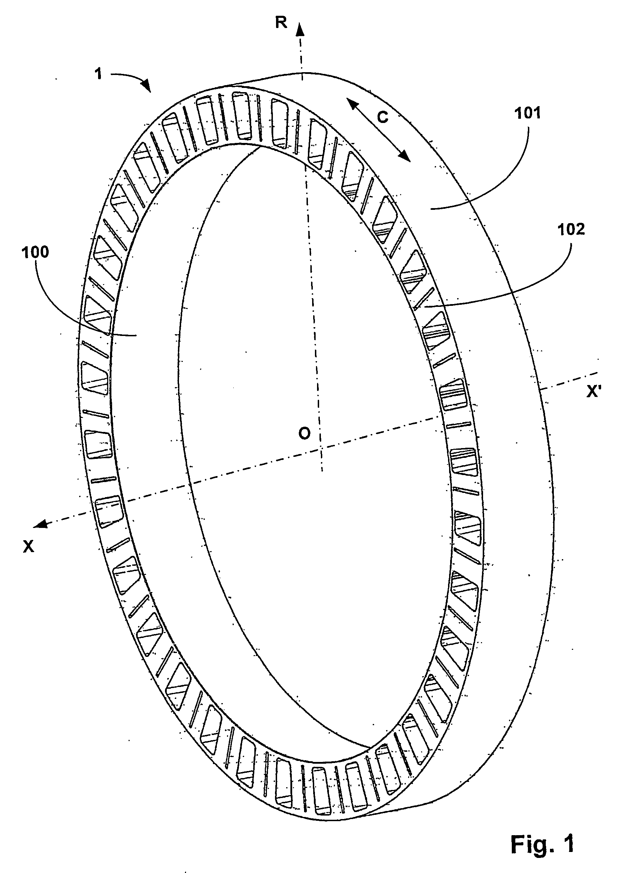

Dans ce qui suit, on désignera par les mêmes références les éléments identiques des appuis représentés sur les figures 1 à 13.

L'appui 1 tel que représenté sur la vue schématique de la figure 1 comprend une base 100 sensiblement cylindrique et destinée à s'adapter à une jante (non représentée), un sommet 101, destiné à entrer en contact avec la partie intérieure du pneumatique située sous la bande de roulement en cas de perte de pression, et un corps 102 reliant la base au sommet.

La direction axiale XX' est une direction sensiblement parallèle aux génératrices des cylindres formés par la base ou le sommet. La direction radiale R est une direction perpendiculaire à la direction axiale, et la direction circonférentielle C est perpendiculaire aux deux directions précédentes et tangente aux cylindres formés par la base ou le sommet.

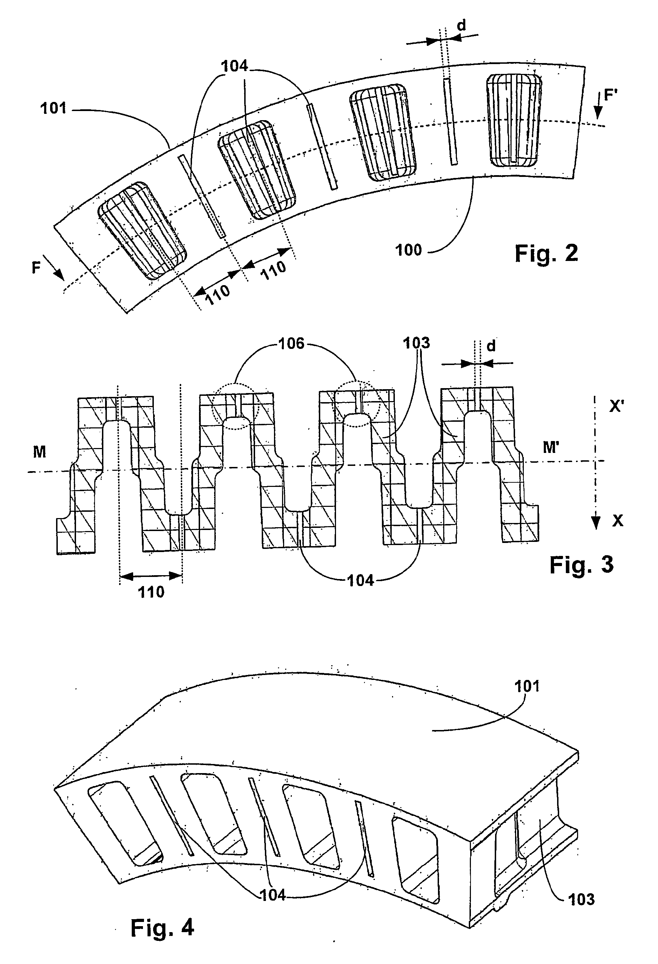

Le corps de l'appui annulaire 102 est composé de cloisons 103 telles que représentées sur les figures 2 et 3. Ces cloisons 103, généralement radiales, s'étendent axialement de part et d'autre d'un plan médian perpendiculaire à l'axe XX', passant sensiblement par l'équateur des cylindres formés par la base 100 ou le sommet 101, et dont la trace sur la coupe de la figure 3 est représentée par la ligne MM'. Les cloisons sont réparties sur la circonférence dudit appui 1. Des jonctions 106, généralement radiales, s'étendant sensiblement circonférentiellement, relient par leurs extrémités deux cloisons adjacentes.

Ces jonctions 106 sont interrompues par des saignées axiales 104, s'étendant radialement sur la totalité de la jonction et débouchant axialement de part et d'autre de ladite jonction. La portion d'appui comprise entre deux saignées constitue un segment 110.

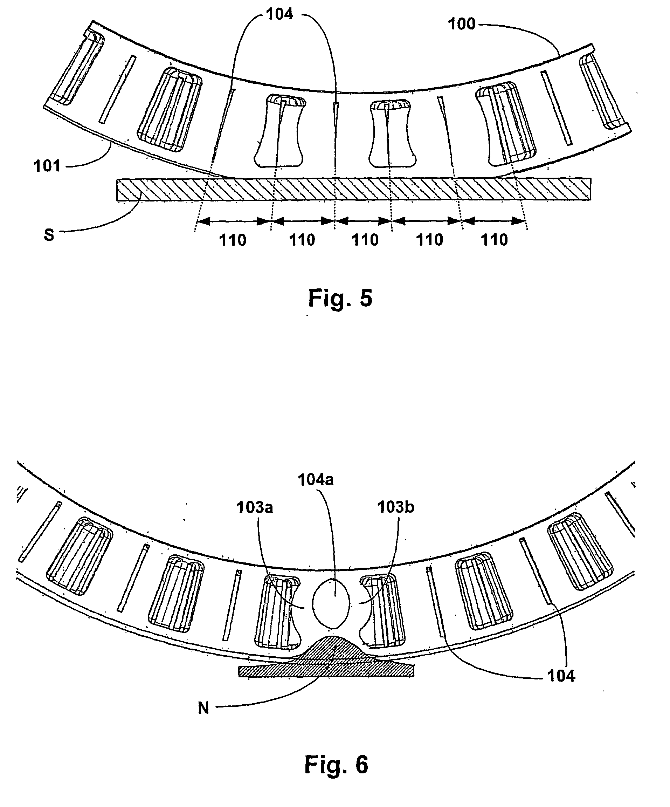

La figure 5 représente schématiquement le mode de fonctionnement, au niveau de l'aire de contact, de l'appui 1 à pression réduite voire nulle et portant sa charge nominale. Les forces de compression radiales génèrent une composante circonférentielle au niveau des segments 110 en contact avec la portion de pneumatique en contact avec le sol S. Ces forces sont liées à la déradialisation du sommet 101 de l'appui sous l'effet de sa mise à plat lors du passage dans l'aire de contact.

Sous l'action de ces forces circonférentielles, les segments 110 sont mis en compression et s'arc-boutent les uns contre les autres au niveau des saignées 104. Ce qui permet, en s'aidant des forces de frottement entre les lèvres des saignées 104 d'éviter tout déplacement circonférentiel ou axial des jonctions 106, ayant pour effet néfaste de provoquer la déradialisation des cloisons 103 et de précipiter le flambage de ces dernières.

Ainsi, le corps annulaire 102 se comporte sensiblement comme si aucune saignée 104 n'avait été pratiquée dans les jonctions 106, et bénéficie de ce fait des avantages structurels liés à cette configuration géométrique.

Pour obtenir cette propriété il est nécessaire d'ajuster la distance dans le sens circonférentiel entre deux saignées 104 de manière à ce qu'il y ait toujours au moins trois segments 110 complets en contact avec la partie intérieure du pneumatique située sous la bande de roulement et en contact avec le sol S.

De plus, la largeur d dans la direction circonférentielle entre les deux lèvres d'une même saignée 104 doit être choisie judicieusement. On recherchera néanmoins une valeur aussi faible que possible afin de bénéficier pleinement de l'effet d'arc-boutement lié à la mise en compression des segments. Expérimentalement on observe que cette distance d ne doit pas excéder 2 mm et préférentiellement on choisira une valeur de la distance d inférieure à 1 mm.

L'effet recherché par l'invention se manifeste en revanche, lorsque le pneumatique entre en contact avec le bord N d'un nid de poule ou d'un trottoir et lors de la phase de compression combinée comme cela est représenté sur la figure 6. Dans ces circonstances, l'effort va se localiser sur une génératrice du cylindre formé par le sommet de l'appui et va s'appliquer au niveau d'un seul segment voire entre deux segments consécutifs. Par ailleurs, en l'absence de mise à plat, les forces de compression circonférentielle liées à la déradialisation du sommet de l'appui ne s'exercent plus, ne permettant plus la coopération entre deux segments consécutifs, ce qui provoque le flambement des deux cloisons 103a et 103b situées de part et d'autre de la saignée 104a circonférentiellement la plus proche du point d'impact, laquelle va avoir tendance à s'ouvrir, tel que l'illustre la figure 6. En effet, en raison de la saignée pratiquée sur la jonction 106, la résistance au flambement des cloisons de ces segments est moindre que dans le cas où aucune saignée ne serait pratiquée. En conséquence, et sous l'effet d'un effort localisé, il est possible pendant la course combinée de l'appui et du pneumatique, de réduire la phase de mise en compression de l'appui et de prolonger l'effet de la course pneumatique afin de réduire les efforts mécaniques transmis au centre roue.

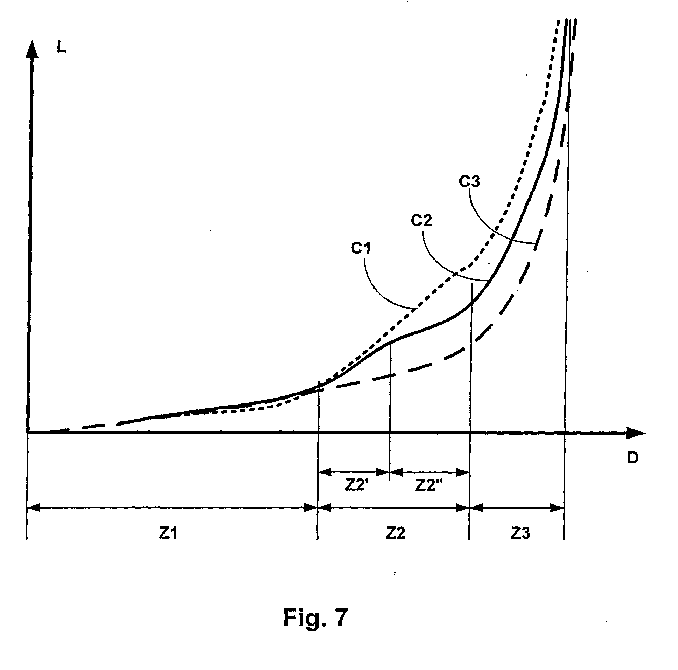

Ce phénomène est illustré sur le diagramme représenté sur la figure 7 qui représente en ordonnée la force L exercée au centre roue par l'action d'un obstacle ponctuel dont la distance de pénétration D est consignée en abscisse.

Sur ce schéma, obtenu pour une roue de dimension 235x500 A, un pneumatique de dimension 245x690xR500 et un appui de dimension 90-500(35), sont représentées trois configurations :
- C1 représente le cas d'un ensemble roue/pneumatique avec un appui ne comprenant pas de saignées,
- C2 représente le cas d'un ensemble roue/pneumatique avec des appuis comportant des saignées conformes à l'invention ; le profil circonférentiel des cloisons et des jonctions étant identique à celui de l'appui représenté en C1,
- C3 représente le cas d'un ensemble roue/pneumatique ne comportant pas d'appui.

Fort logiquement, l'enfoncement de l'obstacle se traduit par une augmentation de la force enregistrée, ce qui permet de distinguer les trois zones de fonctionnement décrites précédemment :
- Z1 correspond à la course pneumatique de l'enfoncement ;
- Z2 correspond à la phase combinée au cours de laquelle l'appui rentre en contact avec le pneumatique,
- Z3 correspond à la compression non pneumatique et se termine par une phase de transmission purement mécanique.

Ce schéma met clairement en évidence le mode de fonctionnement d'un système équipé d'un appui selon l'invention, pour lequel on observe une zone de fonctionnement Z1 similaire aux deux autres, une zone Z2 que l'on peut décomposer en deux zones bien distinctes où Z2' correspond à la mise en compression des cloisons et où Z2" correspond à l'apparition du phénomène de flambement des cloisons 103a et 103b et à l'ouverture de la saignée 104a, et tels qu'illustrés sur la figure 6.

On constate que l'appui conforme à l'invention permet de réduire sensiblement la phase de mise en compression de l'appui dans la zone Z2, se rapprochant de celui d'un système ne comportant pas d'appui tel que décrit par la courbe C3, et se décale de la configuration d'un appui sur lequel aucune saignée n'aurait été pratiquée, décrit par la courbe C1, et dont le profil présente dans la zone Z2 un gradient d'augmentation de l'effort plus important pour un même déplacement.

Il est possible également, en référence à la configuration qui vient d'être exposée et sans se départir de l'esprit de l'invention, de réduire encore plus l'énergie nécessaire pour provoquer le flambement des cloisons soumises à un choc ponctuel.

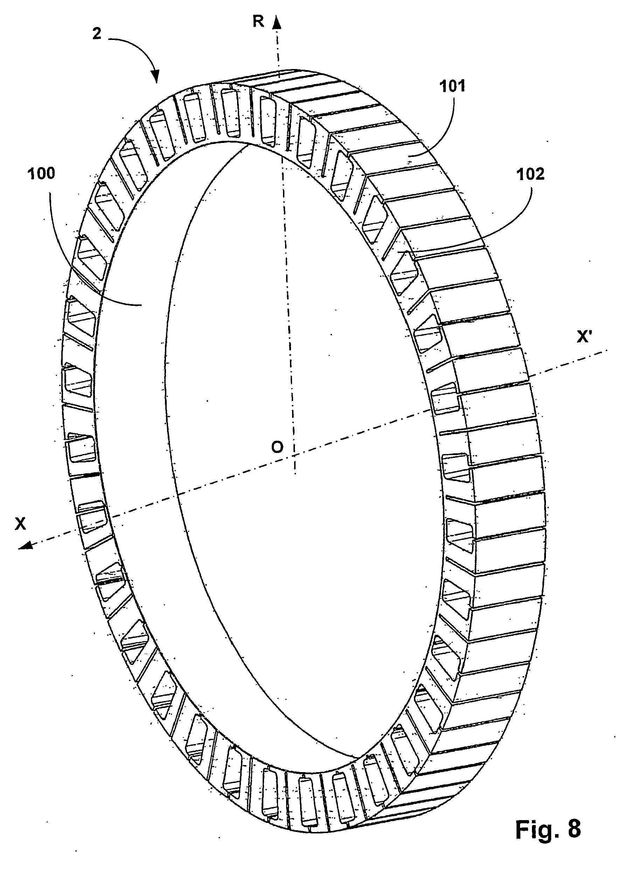

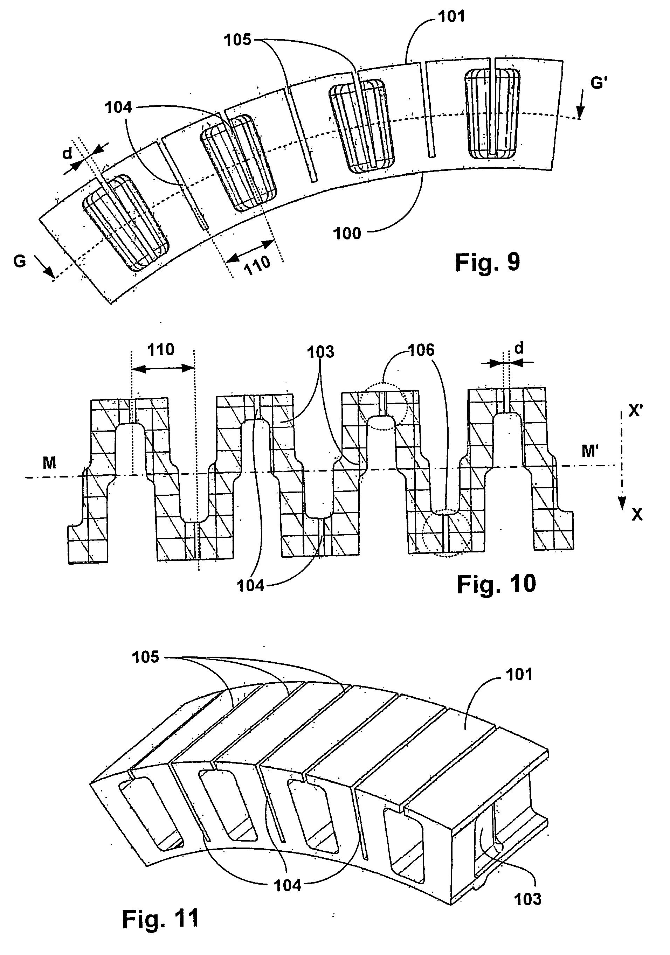

A cet effet, une autre forme de mise en oeuvre de l'invention consiste à prolonger la saignée 104 pratiquée dans la jonction 106 par une saignée 105 pratiquée radialement dans toute l'épaisseur du sommet de l'appui 2 et s'étendant axialement sur toute la largeur de ce dernier, de part et d'autre du plan médian passant sensiblement par l'équateur des cylindres formés par la base 100 ou le sommet 101, dont la trace sur la coupe de la figure 10 est représentée par la ligne MM', et tel qu'illustré sur les figures 8, 9, 10 et 11.

Cette configuration permet de réduire encore la résistance structurelle au flambement des cloisons 103, celles ci n'étant plus reliées entre elles par leurs sommets.

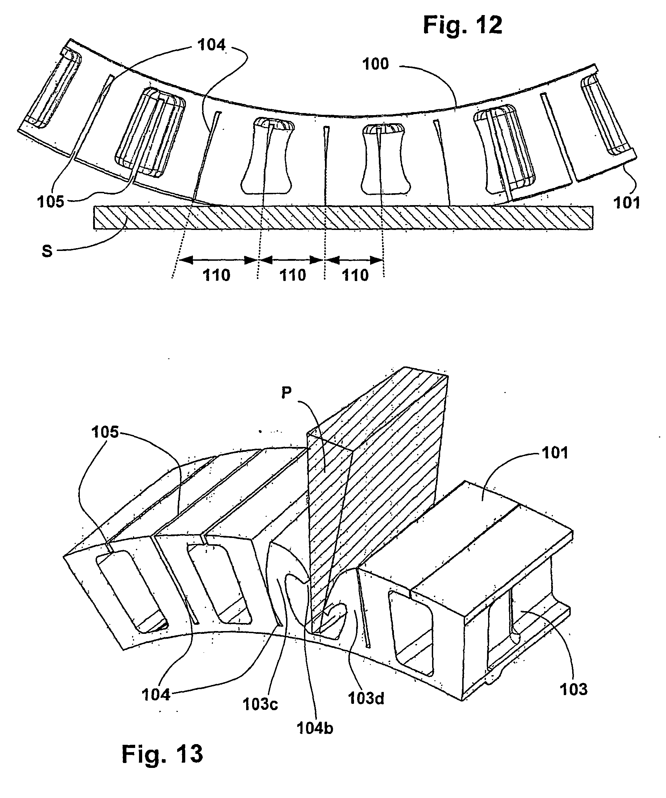

Dans ces conditions, le mode de fonctionnement en condition de roulage à plat est sensiblement équivalent à celui décrit précédemment et dans lequel les cloisons s'appuient les unes contre les autres sous l'effet des forces circonférentielles induites par la déradialisation au moment de la mise à plat, et sous réserve, comme dans la situation déjà décrite précédemment, que trois segments au moins soient présents simultanément dans l'aire de contact, comme le montre la figure 12.

En revanche, lors du passage dans un nid de poule ou sur le bord d'un trottoir, comme cela est illustré sur la figure 13, les cloisons 103c et 103d des segments situés circonférentiellement de part et d'autre de la saignée 104b la plus proche du point de contact avec l'obstacle ponctuel P, vont avoir tendance à flamber pour un plus faible niveau d'énergie, et la saignée 104b à s'ouvrir largement pour laisser pénétrer l'obstacle P.

Une troisième configuration, intermédiaire entre les deux précédemment décrites, consiste à ne faire déboucher les saignées 105 que dans la partie médiane ou centrale du sommet de l'appui.

Les matériaux susceptibles de convenir pour réaliser des appuis conformes à l'invention sont ceux qui sont classiquement utilisés pour la réalisation des appuis de soutien tels que, à titre d'exemple et de manière non limitative, les mélanges caoutchoutiques dont le module d'élasticité peut varier de 10 à 40 MPa, les élastomères de polyuréthanne ayant des modules d'élasticité compris entre 20 et 150 Mpa ou encore, les élastomères thermoplastiques dont le module d'élasticité est compris entre 20 et 150 Mpa.

Le module des matériaux élastomères exprimé en Mpa correspond à la mesure en traction et à un allongement de 10% d'une éprouvette, selon la norme ISO 6892 de 1984 et à la norme ASTM D 412 de 1998 en ce qui concerne les compositions de caoutchouc.

Enfin, on prendra soin de définir les saignées pratiquées dans les cloisons 103 ou dans le sommet 105 de telle manière qu'elles présentent le moins de contre dépouille possible s'opposant à un démoulage dans la direction axiale de l'appui de soutien et susceptibles de compliquer le processus de fabrication.

Ainsi la mise en oeuvre de l'invention s'avère particulièrement intéressante dans la configuration où il est impératif de réduire la masse totale de l'appui, ce qui s'obtient en utilisant des matériaux de module d'élasticité élevé. La contrepartie de ce choix technique se traduit généralement par une augmentation de la rigidité radiale de l'appui et une baisse de la performance en cas de choc avec un obstacle localisé comparé à la situation d'un appui réalisé avec un matériau de plus faible module ou encore à une situation dans laquelle aucun appui ne serait monté. L'invention permet d'améliorer le niveau de la performance en cas de choc ponctuel accidentel, tout en bénéficiant des avantages liés à la configuration structurelle des appuis traditionnels.

## Revendications

1. Appui de soutien (1, 2) destiné à être monté sur une jante à l'intérieur d'un pneumatique équipant un véhicule, pour supporter la bande de roulement de ce pneumatique en cas de perte de pression de gonflage, comportant :
- une base (100) sensiblement cylindrique destinée à s'adapter autour de la jante,
- un sommet (101) sensiblement cylindrique destiné à entrer en contact avec la partie intérieure du pneumatique située sous la bande de roulement en cas de perte de pression et laissant une garde par rapport à celle-ci à la pression nominale de fonctionnement du pneumatique, et
- un corps annulaire (102) reliant la base et le sommet, ledit corps étant constitué par une pluralité de cloisons (103) généralement radiales, réparties sur la circonférence dudit appui et s'étendant sensiblement axialement et par des jonctions (106), généralement radiales, s'étendant sensiblement circonférentiellement et reliées par leurs extrémités à deux cloisons adjacentes,
**caractérisé en ce que** les jonctions (106) sont interrompues par des saignées (104) axiales de très faible largeur s'étendant radialement sur la totalité de la jonction (106) et débouchant axialement de part et d'autre desdites jonctions (106), la portion d'appui comprise entre deux saignées constituant un segment (110).

2. Appui de soutien selon la revendication 1, tel que la largeur (d) dans le sens circonférentiel des saignées (104) est inférieure à 2 mm.

3. Appui de soutien selon la revendication 1, tel que la largeur (d) dans le sens circonférentiel des saignées (104) est inférieure à 1 mm.

4. Appui de soutien selon l'une des revendications 1 à 3, tel que la distance dans le sens circonférentiel entre deux saignées (104) est ajustée de manière à ce que, lorsque l'appui est en mode de roulage à pression réduite ou nulle et supporte sa charge nominale, il y ait toujours au moins trois segments (110) complets en contact avec la partie intérieure du pneumatique située sous la bande de roulement et en contact avec le sol (S).

5. Appui de soutien selon une des revendications 1 à 4, tel que la saignée radiale (104) pratiquée dans la jonction (106) est prolongée par une saignée (105) pratiquée radialement dans toute l'épaisseur du sommet (101) de l'appui et s'étendant axialement dans la partie centrale dudit sommet.

6. Appui de soutien selon une des revendications 1 à 4, tel que la saignée radiale (104) pratiquée dans la jonction (106) est prolongée par une saignée (105) pratiquée radialement dans toute l'épaisseur du sommet (101) de l'appui et s'étendant axialement sur toute la largeur dudit sommet.

7. Appui de soutien selon l'une quelconque des revendications 1 à 5, tel que la forme des cloisons (103), des jonctions (106) et des saignées (104, 105) est adaptée de manière à ne comprendre aucune partie en contre dépouille s'opposant à un démoulage axial de l'appui de soutien (1, 2).

8. Appui selon l'une des revendications 1 à 7, tel que le matériau constitutif dudit appui de soutien (1, 2) est un mélange caoutchouteux de module d'élasticité compris entre 10 et 40 Mpa.

9. Appui selon l'une des revendications 1 à 7, tel que le matériau constitutif dudit appui de soutien (1, 2) est un élastomère de polyuréthane de module d'élasticité compris entre 20 et 150 Mpa.

10. Appui selon l'une des revendications 1 à 7, tel que le matériau constitutif dudit appui de soutien (1,2) est un élastomère thermoplastique de module d'élasticité compris entre 20 et 150 MPa.

## Claims

1. A bearing support (1, 2) intended to be mounted on a rim inside a tyre fitted on a vehicle, to support the tread of said tyre in the event of a loss of inflation pressure, comprising :
- a substantially cylindrical base (100), intended to conform to the rim,
- a substantially cylindrical crown (101) intended to enter into contact with the internal part of the tyre situated under the tread in the event of a loss of pressure and leaving clearance relative thereto at the rated operating pressure of the tyre, and
- an annular body (102) linking the base and the crown, said body consisting of a plurality of generally radial partitions (103), distributed over the circumference of said support and extending substantially axially, and of generally radial junctions (106), extending substantially circumferentially and connected by their ends to two adjacent partitions,
**characterised in that** the junctions (106) are interrupted by very narrow axial incisions (104) extending radially over the entirety of said junction (106) and opening axially on either side of said junctions (106), the support portion between two incisions constituting a segment (110).

2. A bearing support according to claim 1, such that the width (d) in the circumferential direction of the incisions (104) is less than 2 mm.

3. A bearing support according to claim 1, such that the width (d) in the circumferential direction of the incisions (104) is less than 1 mm.

4. A bearing support according to one of claims 1 to 3, such that the distance in the circumferential direction between two incisions (104) is adjusted in such a way that, when the support is running under reduced or zero pressure and bearing its rated load, there are always at least three complete segments (110) in contact with the internal part of the tyre situated under the tread and in contact with the ground (S).

5. A bearing support according to one of claims 1 to 4, such that the radial incision (104) formed in the junction (106) is extended by an incision (105) formed radially throughout the thickness of the crown (101) of the support and extending axially in the central portion of said crown.

6. A bearing support according to one of claims 1 to 4, such that the radial incision (104) formed in the junction (106) is extended by an incision (105) formed radially throughout the thickness of the crown (101) of the support and extending axially over the entire width of said crown.

7. A bearing support according to any one of claims 1 to 5, such that the shape of the partitions (103), the junctions (106) and the incisions (104, 105) is so adapted as not to comprise any undercut part opposing axial demoulding of the bearing support (1, 2).

8. A support according to one of claims 1 to 7, such that the material constituting said bearing support (1, 2) is a rubber mix with a modulus of elasticity of between 10 and 40 MPa.

9. A support according to one of claims 1 to 7, such that the material constituting said bearing support (1, 2) is a polyurethane elastomer with a modulus of elasticity of between 20 and 150 MPa.

10. A support according to one of claims 1 to 7, such that the material constituting said bearing support (1, 2) is a thermoplastic elastomer with a modulus of elasticity of between 20 and 150 MPa.

## Patentansprüche

1. Stützauflage (1, 2), die dazu bestimmt ist, auf eine Felge im Inneren eines Luftreifens montiert zu werden, der zur Ausstattung eines Fahrzeugs gehört, um die Lauffläche dieses Luftreifens im Fall eines Reifendruckverlusts zu stützen, die aufweist:
- eine im Wesentlichen zylindrische Basis (100), die dazu bestimmt ist, sich um die Felge herum anzupassen,
- einen im Wesentlichen zylindrischen Scheitel (101), der dazu bestimmt ist, im Fall eines Druckverlusts mit dem unter der Lauffläche befindlichen inneren Bereich des Luftreifens in Kontakt zu kommen, und der bei Betriebsnenndruck des Luftreifens eine Freiheit bezüglich dieses Bereichs lässt, und
- einen Ringkörper (102), der die Basis und den Scheitel verbindet, wobei der Körper aus mehreren, allgemein radialen Trennwänden (103), die auf dem Umfang der Auflage verteilt sind und sich im Wesentlichen axial erstrecken, und aus allgemein radialen Verbindungen (106) besteht, die sich im Wesentlichen in Umfangsrichtung erstrecken und über ihre Enden mit zwei benachbarten Trennwänden verbunden sind,
**dadurch gekennzeichnet, dass** die Verbindungen (106) von axialen Einschnitten (104) sehr geringer Breite unterbrochen werden, die sich radial über die ganze Verbindung (106) erstrecken und axial zu beiden Seiten der Verbindungen (106) münden, wobei der zwischen zwei Einschnitten liegende Auflagenabschnitt ein Segment (110) bildet.

2. Stützauflage nach Anspruch 1, derart, dass die Breite (d) der Einschnitte (104) in Umfangsrichtung geringer als 2 mm ist.

3. Stützauflage nach Anspruch 1, derart, dass die Breite (d) der Einschnitte (104) in Umfangsrichtung geringer als 1 mm ist.

4. Stützauflage nach einem der Ansprüche 1 bis 3, derart, dass der Abstand in Umfangsrichtung zwischen zwei Einschnitten (104) so angepasst wird, dass, wenn die Auflage im Fahrmodus mit verringertem Druck oder Null Druck ist und ihre Nennlast trägt, es immer mindestens drei vollständige Segmente (110) in Kontakt mit dem Innenbereich des Luftreifens gibt, der sich unter der Lauffläche und in Kontakt mit dem Boden (S) befindet.

5. Stützauflage nach einem der Ansprüche 1 bis 4, derart, dass der radiale Einschnitt (104), der in der Verbindung (106) ausgebildet ist, von einem Einschnitt (105) verlängert wird, der radial in der ganzen Dicke des Scheitels (101) der Auflage ausgebildet ist und sich axial im zentralen Bereich des Scheitels erstreckt.

6. Stützauflage nach einem der Ansprüche 1 bis 4, derart, dass der radiale Einschnitt (104), der in der Verbindung (106) ausgebildet ist, von einem Einschnitt (105) verlängert wird, der radial in der ganzen Dicke des Scheitels (101) der Auflage ausgebildet ist und sich axial über die ganze Breite des Scheitels erstreckt.

7. Stützauflage nach einem der Ansprüche 1 bis 5, derart, dass die Form der Trennwände (103), der Verbindungen (106) und der Einschnitte (104, 105) so angepasst ist, dass sie keinen hinterschnittenen Bereich aufweist, der einem axialen Ausformen der Stützauflage (1, 2) entgegenwirkt.

8. Auflage nach einem der Ansprüche 1 bis 7, derart, dass der Werkstoff der Stützauflage (1, 2) eine Kautschukmischung mit einem Elastizitätsmodul zwischen 10 und 40 Mpa ist.

9. Auflage nach einem der Ansprüche 1 bis 7, derart, dass der Werkstoff der Stützauflage (1, 2) ein Polyurethan-Elastomer mit einem Elastizitätsmodul zwischen 20 und 150 Mpa ist.

10. Auflage nach einem der Ansprüche 1 bis 7, derart, dass der Werkstoff der Stützauflage (1, 2) ein thermoplastisches Elastomer mit einem Elastizitätsmodul zwischen 20 und 150 Mpa ist.
